# EUROPEAN PATENT APPLICATION

(11) **EP 1 656 987 A1**
(43) Date of publication of application: **17.05.2006**
(21) Application number: 04027188.4
(22) Date of filing: 16.11.2004
(51) Int. Cl.: B01D 65/06, B01D 65/02

(54) **Process for cleaning a filtration membrane**

(71) Applicant: JohnsonDiversey, Inc., Sturtevant, Wisconsin 53177-0902 (US)
(72) Inventor: Vreeman, Jan Arend, 3454 SJ De Meern (NL); Verbiest, Willem Paul, 3137 ZA Vlaardingen (NL); Dusamos, Marcellus Gerardus, 3601 JK Maarssen (NL); Te Poele, Sandy c/o Delft University of Technology, 2600 GA Delft (NL); Van der Graaf, Jaap c/o Delft University of Tech., 2600 GA Delft (NL); Menkveld, Wilbert, 7400 AE Deventer (NL); Boom, Jeroen c/o Rossmark Water treatment, 6716 BZ Ede (NL)
(74) Representative: Isenbruck, Günter

(57) **Abstract**

The present invention relates to a process for cleaning a filtration membrane, the membrane being used for the filtration of waste water treatment plant effluent, wherein the process comprises at least one enzymatic cleaning step using an enzymatic cleaning solution.

## Description

The present invention relates to the cleaning of filtration membranes, which are used for the treatment of wastewater.

Applications of membrane filtration in advanced treatment of wastewater for reuse purposes or upgrading the effluent quality are increasing, due to water shortage in dry areas and stricter legislation in near future. A large number of full-scale installations around the world already are in operation for several years.

During operation, membrane fouling problems are becoming more severe. These problems are not only observed in ultrafiltration of waste water treatment plant effluent but also in other membrane filtration applications like treatment of surface water. The applied hydraulic and chemical cleaning methods however, are often not efficient enough and are often based on practical experiences.

Many approaches in applying cleaning strategy to maximise flux recovery for organic fouled membranes have been studied. The effectiveness of different chemicals like NaOH, NaOCl, HCl, citric acid and anionic surfactant have been studied often by short-term filtration test and occasionally by pilot scale studies to investigate irreversible fouling. However, more mechanistic studies of cleaning strategies for the removal of irreversible fouling based on physicochemical properties of waste water treatment plant effluent foulants are relatively rare.

Specific cleaning agents provide information about the nature and physicochemical properties of the foulants. Interactions between foulants and membrane material are disturbed or broken by the use of cleaning agents which provide information about the type of bounding between the foulants and membrane material.

In the state of the art, membranes are either cleaned hydraulically or chemically. Hydraulic cleaning can be carried out with water or a combination of water and air. Chemical cleaning can be carried out by a variety of cleaning chemicals.

Chemical cleaning contains several steps which have to be carried out in a certain order. First a back flush (BF) or forward flush (FF) is provided to remove the reversible fouling. The chemical cleaning solution can be introduced to the membrane surface by a BF or FF. Then the membranes are often beeing soaked for a certain time. To introduce mechanical energy the cleaning solution can be pumped along the membrane surface. The last step is flushing the membranes with permeate, tap water or ultra pure water.

In general, for chemical cleaning four aspects can be mentioned: contact time, chemical reaction, temperature and mechanical energy. These parameters can be changed depending on the present fouling and cleaning agent. The effect of temperature on chemical cleaning can be exponential. Most chemical cleaning is performed between 30 and 50°C depending on the membrane module limitations.

The object of the present invention is to provide a process for cleaning a filtration membrane, which is used for the filtration of waste water treatment plant effluent, in order to reduce or eliminate the fouling of the membrane. Still another object of the present invention is to clean such a membrane in order to reach essentially its starting clean water flux.

According to the present invention the foregoing objects and others are achieved by a process for cleaning a filtration membrane, the membrane being used for the filtration of waste water treatment plant effluent, wherein the process comprises at least one enzymatic cleaning step using an enzymatic cleaning solution.

An enzymatic cleaning step can advantageously reduce or eliminate irreversible fouling, which is caused during ultrafiltration of waste water treatment plant effluent and which is probably caused by protein adsorption as one of the main constituents of extracellular polymeric substances. Therefore a new enzymatic cleaning protocol based on an enzymatic cleaning solution is applied by the present invention.

According to a preferred embodiment of the present invention, the cleaning step is carried out with the enzymatic cleaning solution having a temperature from 10 to 50°C, particularly from 25 to 30°C.

The process according to the present invention can comprise the flushing of the membrane with water before or after the enzymatic cleaning step or both. The water used for flushing can be for example tap water or a permeate of a membrane in the waste water treatment plant. Furthermore, the enzymatic cleaning solution can be circulated across the membrane for a circulation time. The circulation time can be preferably from 0.5 to 1.5 hours, particularly 1 hour.
Furthermore, the membrane can be soaked with the enzymatic cleaning solution for a soaking time, the soaking time being preferably from 12 to 48 hours, particularly 24 hours.

According to one embodiment of the present invention, the enzymatic cleaning step contains the steps
A) Forward flushing of the membrane with a cleaning liquid, preferably with a permeate,
B) Circulating the enzymatic cleaning solution across the membrane for 1 hour,
C) Soaking of the membrane with the enzymatic cleaning solution for 24 hours,
D) Circulating the enzymatic cleaning solution across the membrane for 1 hour and
E) Flushing of the membrane3 with water.

The membrane, which can be cleaned by the process of the present invention can be for example an ultrafiltration membrane, a microfiltration membrane, a nanofiltration membrane or a reverse osmosis membrane.

According to one preferred embodiment of the present invention, the enzymatic cleaning solution contains a proteolytic enzyme from the endo or exo type or a mixture thereof.
According to one preferred embodiment of the present invention, the enzymatic cleaning solution contains protease.

The enzymatic cleaning solution used in the process of the present invention preferably contains an enzyme with a concentration from 0.0125% to 0.1%. Preferably the enzymatic cleaning solution has a pH-value from 8.5 to 10.

Furthermore, the membrane cleaning process of the present invention can contain an acidic cleaning step using an acidic cleaning solution for cleaning the membrane. The acidic cleaning step can applied before the enzymatic cleaning step, after the enzymatic cleaning step or both before and after the enzymatic cleaning step. Preferably, a mild acidic pre cleaning is applied before applying the enzymatic cleaning protocol.

The acidic cleaning solution can contain at least one acid and at least one supplementary cleaning agent. The at least one supplementary cleaning agent can be chosen from the group of surfactants, chelating agents and sequestrants.

According to one preferred embodiment of the present application, the acidic cleaning solution has a pH-value smaller than 3.

Furthermore, the membrane cleaning process of the present invention can contain an alkaline cleaning step using an alkaline cleaning solution for cleaning the membrane.

The alkaline cleaning solution can contain at least one base and at least one supplementary cleaning agent. The at least one supplementary cleaning agent can be chosen from the group of surfactants, chelating agents and sequestrants.

According to one preferred embodiment of the present application the alkaline cleaning solution has a pH-value greater than 9, particularly from 9.5 to 12.5.

In the process according to the present invention, different cleaning steps can be carried out successively. The different cleaning steps are preferably carried out with time gaps in the range of days or weeks in between. Different cleaning steps can also be carried out one after the other without a considerable time gap in between.

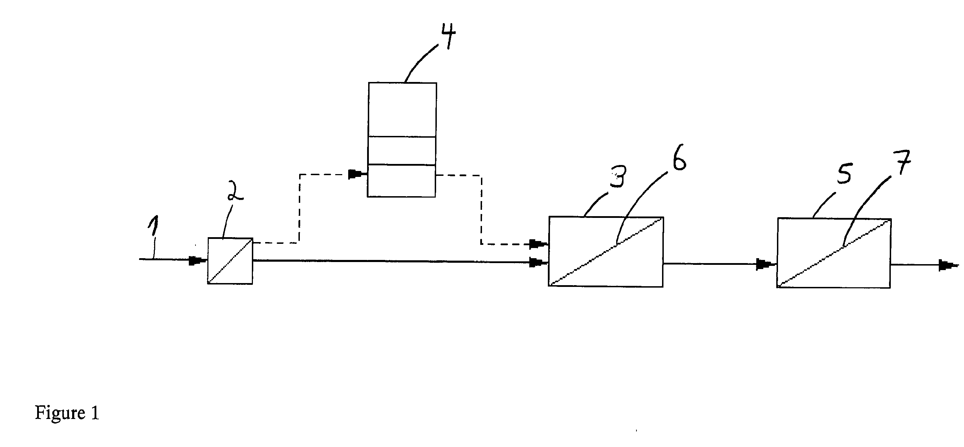

The invention is illustrated in the attached drawing, wherein
figure 1 shows a schematic drawing of the configuration of a waste water treatment plant, the membranes of which can be cleaned using the process according to the present invention.

According to figure 1, waste water treatment plant effluent 1 is lead to a screen 2, from where it can pass directly to a microfiltration device 3 or first to a multimedia filter 4 and then to the microfiltration device 3. The microfiltered liquid coming from the microfiltration device 3 enters an ultrafiltration device 5. The membranes 6 and 7 of the microfiltration device 3 and the ultrafiltration device 5 are exposed to fouling, their clean water flux being reduced. In order to recover the clean water flux of these membranes up to 100%, the process of the present invention can be applied to these membranes.

A configuration as shown in figure 1 was used for testing the process according to the present invention.

The multimedia filter 4 contained one layer of anthracite and one layer of sand and was operated with a fixed water level above the filter bed of 1.73 meter. Coagulant could be dosed in-line the feed water pipe and mixed in a static mixer before the feed water entered the filter. Flocculation took place above and in the filter bed.

The microfiltration device 3 contained three modules providing a membrane surface area of 45 m². The pore size of the membranes was 0.2 *µ*m. The installation was operated at constant flux, which varied between 50 and 105 1/m²·h, and with a production interval of 15 minutes followed by a back wash. Chemical cleaning was performed once or twice a week depending on the filtration resistance.

The ultrafiltration device 5 contained membranes of X-flow with a capillary diameter of 0.8 mm and a pore size of 0.02 *µ*m. The installation capacity was 10 m³/h and was equipped with two 8-inch modules, each with a length of 1.5 meter, providing a membrane area of 70 m². The installation was operated at constant flux. Coagulant could be dosed in-line to the feed water.

### Example 1

During the periods of pilot investigations at the waste water treatment plants several cleaning experiments were performed. First an enzymatic cleaning with protease was compared to its basic alkaline cleaning in order to investigate the effectiveness of the enzyme protease, indicating protein adsorption as fouling mechanism. The applied cleaning solutions and protocol are presented in table 1. The effect of the cleaning was determined by measuring the Clean Water Flux (CWF) before and after cleaning. These cleaning experiments were performed two times. At a first waste water treatment plant these experiments were performed after 8 months of operation, where as at a second waste water treatment plant these experiments were carried out at the beginning of the period of pilot investigations

**Table 1: Cleaning protocol of enzymatic and basic alkaline cleaning**

| Cleaning Solution | Enzymatic | Basic alkaline |
|---|---|---|
| Enzyme | Protease | - |
| Basic solution | Divos 110 (commercial alkaline cleaning product) | |
| pH | 9.3 (adjusted by HCl) | |
| Protocol | Low temperature cleaning | |
| | Forward flush with permeate | |
| | Preparing cleaning solution at 25-30 °C | |
| | 1 hour circulation | |
| | Overnight soaking (24 hours) | |
| | 1 hour circulation | |
| | Flushing with tap water | |

At the end of the pilot investigations the membranes were cleaned in order to continue the research at a different waste water treatment plant. Therefore different cleaning methods were applied successively under which the enzymatic cleaning with protease. The applied cleaning methods are presented in table 2.

**Table 2: Description of the applied cleaning methods**

| Cleaning method | Cleaning agent(s) | pH | Protocol |
|---|---|---|---|
| Enzymatic | Divos 110 protease | + 9.3 | Low temperature cleaning |
| Basic alkaline | Divos 110 | 9.3 | Low temperature cleaning |
| Alkaline | Divos 110 | 12.5 | Low temperature cleaning |
| Acid FF | Divos 2 | 2 | FF¹⁾ - 30 min soaking - flushing |
| Acid BF | Divos 2 | 2 | BF²⁾ - 30 min soaking - flushing |
| Acid | Divos 2 | 2 | Low temperature cleaning at 22 °C |
| Mild acid | Divos 25 | 3.5 | Low temperature cleaning |

| | | | |
|---|---|---|---|
| ¹⁾ FF = Forward Flush | | | |
| ²⁾ BF = Back Flush | | | |

The method of Rosenberger has been modified in order to measure proteins in waste water treatment plant effluent. This method is based on the method of Lowry. The adsorption of the formed colour is measured at 750 nm in a 4 cm glass cuvet by the photo spectrometer Milton Roy spectromic 401. The amount of proteins is expressed in mg/l.

The results of the first enzymatic and basic alkaline cleaning experiments are presented in table 3 in chronological order. The Clean Water Flux (CWF) is normalized to 20 °C. The CWF of a new membrane module is between 400 and 500 1/m²·h·bar at 20 °C, given by the manufacture.

**Table 3: Results of enzymatic and basic alkaline cleaning methods**

| Cleaning method | Clean Water Flux (1/m²·h·bar) at 20 °C | | |
|---|---|---|---|
| | Before | After | Effect |
| First waste water treatment plant | | | |
| Enzymatic (1) | 200 | 467 | 267 |
| Enzymatic (2) | 138 | 411 | 273 |
| Basic alkaline (1) | 153 | 344 | 191 |
| Basic alkaline (2) | 165 | 271 | 106 |

| Second waste water treatment plant | | | |
|---|---|---|---|
| Enzymatic (1) | 189 | 421 | 233 |
| Basic alkaline (1) | 237 | 445 | 208 |
| Enzymatic (2) | 241 | 446 | 204 |
| Basic alkaline (2) | 231 | 413 | 181 |

The results show clearly that after applying the new enzymatic cleaning protocol according to the present invention, the CWF returned to its original CWF of a new membrane module. At the first waste water treatment plant the effect of the enzymatic cleaning is significant larger than the basic alkaline cleaning method. In fact the effect of the basic alkaline cleaning decreases over time. This indicates that protein adsorption occurred as fouling mechanism. At the second waste water treatment plant the CWF after the enzymatic cleaning show similar results as after the basic alkaline cleaning. Although the effect of the enzymatic cleaning seems to be larger than for the basic alkaline cleaning, application of both cleaning methods resulted in a 100 % recovery of the CWF.

In figure 2 and 3 the results of these cleaning experiments as well as the membrane fouling after cleaning at the first waste water treatment plant and the second waste water treatment plant respectively are presented as the clean water flux (CWF) normalized at 20 °C against time. The CWF decreases rapidly after starting ultrafiltration of microfiltrate, especially when the CWF starts above 400 1/m²·h·bar. At the first waste water treatment plant the CWF decreases from around 440 to 220 1/m²·h·bar in about 1 day and decreases further to approximately 150 1/m²·h·bar in about 3 days. The CWF at the second waste water treatment plant decreases from around 430 to 305 1/m²·h·bar in about 1 day and decreases further to approximately 260 1/m²·h·bar in about 3 days. At the first waste water treatment plant the CWF decline after 1 day of ultrafiltration of microfiltrate is around 50 % compared to around 30 % at the second waste water treatment plant, which is 40 % less. After about 3 days of filtration the CWF is levelling off to 160 1/m²·h·bar at the first waste water treatment plant whereas at the second waste water treatment plant this value is found around 260 1/m²·h·bar. In other words the fouling of the ultrafiltration membrane by organic macromolecules is more severe at the first waste water treatment plant than at the second waste water treatment plant.

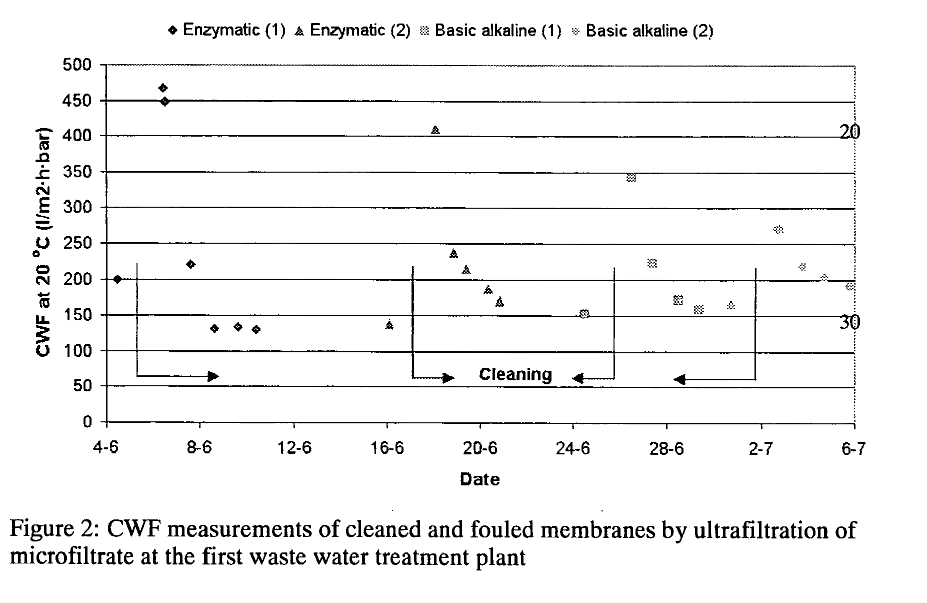

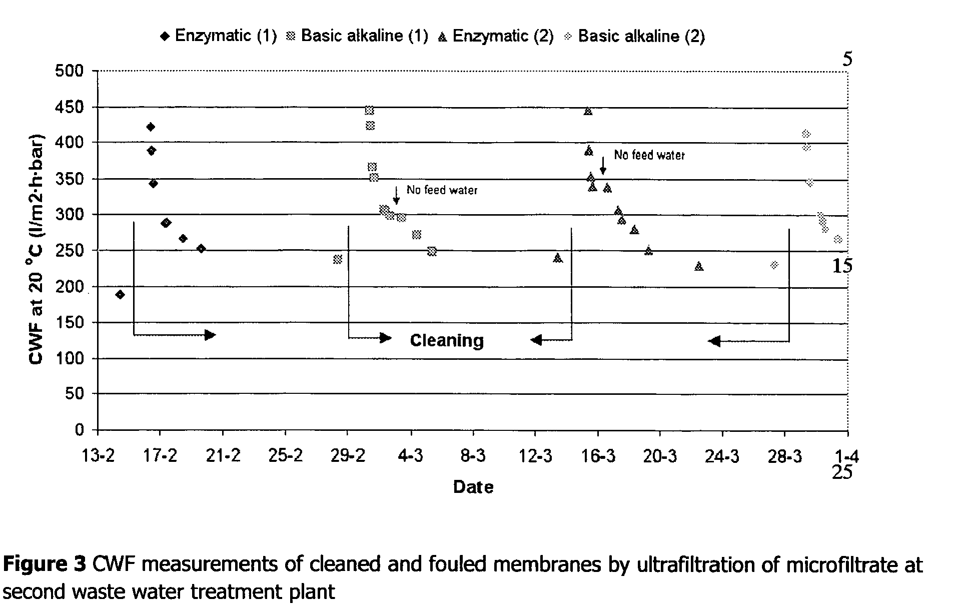

The results show a recovery of the clean water flux of 100 % with respect to the original clean water flux of the membrane module itself after applying the enzymatic cleaning protocol. With this protocol it is possible to perform an enzymatic cleaning at low temperature (25-30 °C) and is therefore applicable for low temperature resistance membranes.

If metal complexes were formed during filtration of (pre-filtered) waste water treatment plant effluent, it is suggested to apply an acid cleaning previous to the enzymatic cleaning.

## Claims

1. A process for cleaning a filtration membrane, the membrane being used for the filtration of waste water treatment plant effluent, wherein the process comprises at least one enzymatic cleaning step using an enzymatic cleaning solution.

2. The process as claimed in claim 1, wherein the cleaning step is carried out with the enzymatic cleaning solution having a temperature from 10 to 50°C.

3. The process as claimed in claim 1 or claim 2, comprising the flushing of the membrane with water before or after the enzymatic cleaning step.

4. The process as claimed in any of claims 1 to 3, wherein the enzymatic cleaning solution is circulated across the membrane for a circulation time.

5. The process as claimed in claim 4, wherein the circulation time is from 0.5 to 1.5 hours.

6. The process as claimed in any of claims 1 to 5, wherein the membrane is soaked with the enzymatic cleaning solution for a soaking time.

7. The process as claimed in claim 6, wherin the soaking time is from 12 to 48 hours.

8. The process as claimed in any of claims 1 to 7, the enzymatic cleaning step containing the steps
F) Forward flushing of the membrane with a cleaning liquid,
G) Circulating the enzymatic cleaning solution across the membrane for 1 hour,
H) Soaking of the membrane with the enzymatic cleaning solution for 24 hours,
I) Circulating the enzymatic cleaning solution across the membrane for 1 hour and
J) Flushing of the membrane with water.

9. The process as claimed in any of claims 1 to 8, wherein the membrane is an ultrafiltration membrane, a microfiltration membrane, a nanofiltration membrane or a reverse osmosis membrane.

10. The process as claimed in any of claims 1 to 9, using an enzymatic cleaning solution containing protease.

11. The process as claimed in any of claims 1 to 10, wherein the enzymatic cleaning solution contains a proteolytic enzyme from the endo or exo type or a mixture thereof.

12. The process as claimed in any of claims 1 to 11, wherein the enzymatic cleaning solution contains an enzyme with a concentration from 0.0125% to 0.1%.

13. The process as claimed in any of claims 1 to 12, wherein the enzymatic cleaning solution has a pH-value from 8.5 to 10.

14. The process as claimed in any of claims 1 to 13, containing an acidic cleaning step using an acidic cleaning solution for cleaning the membrane.

15. The process as claimed in claim 14, wherein the acidic cleaning step is applied before the enzymatic cleaning step.

16. The process as claimed in any of claims 14 or 15, wherein the acidic cleaning solution contains at least one acid and at least one supplementary cleaning agent.

17. The process as claimed in claim 16, the at least one supplementary cleaning agent being chosen from the group of surfactants, chelating agents and sequestrants.

18. The process as claimed in any of claims 14 to 17, wherein the acidic cleaning solution has a pH-value smaller than 3.

19. The process as claimed in any of claims 1 to 18, containing an alkaline cleaning step using an alkaline cleaning solution for cleaning the membrane.

20. The process as claimed in claim 19, wherein the alkaline cleaning solution contains at least one base and at least one supplementary cleaning agent.

21. The process as claimed in claim 20, the at least one supplementary cleaning agent being chosen from the group of surfactants, chelating agents and sequestrants.

22. The process as claimed in any of claims 19 to 21, wherein the alkaline cleaning solution has a pH-value greater than 9.

23. The process as claimed in any of claims 1 to 22, wherein different cleaning steps are carried out successively.

24. The process as claimed in any of claims 1 to 22, wherein different cleaning steps are carried out with time gaps in the range of days or weeks in between.
